# FASCICULE DE BREVET EUROPEEN

(11) **EP 3 368 396 B1**
(45) Date de publication et mention de la délivrance du brevet: **27.11.2019**
(21) Numéro de dépôt: 16806223.0
(22) Date de dépôt: 21.10.2016
(51) Int. Cl.: B62D 25/20, B60N 2/015

(54) **ENSEMBLE POUR LA FIXATION D'UN SIÈGE SUR UN SOUBASSEMENT DE VÉHICULE AUTOMOBILE**
ANORDNUNG ZUR BEFESTIGUNG EINES SITZES AM UNTERBODEN EINES KRAFTFAHRZEUGES
ASSEMBLY FOR FIXING A SEAT TO AN UNDERBODY OF A MOTOR VEHICLE

(30) Priorité: 26.10.2015 FR 1560210; 26.10.2015 FR 1560209; 26.10.2015 FR 1560208
(43) Date de publication de la demande: 05.09.2018
(73) Titulaire: PSA AUTOMOBILES S.A., 78300 Poissy (FR)
(72) Inventeur: SCHIRMER, Vincent, 90160 Perouse (FR); KRSTIC, Dragan, 90400 Danjoutin (FR); BREAL, Ronan, 25200 Bethoncourt (FR); BLAISE, Vincent, 25260 Lougres (FR)
(74) Mandataire: Fernandez, Francis Lionel
(86) Numéro de dépôt international: PCT/FR2016/052745
(87) Numéro de publication internationale: WO 2017/072432

(56) Documents cités:
- EP-A1- 2 230 156
- EP-A2- 0 680 842
- EP-A2- 1 281 604
- EP-A2- 1 808 362
- JP-A- H1 059 027
- US-A- 5 954 390
- US-A1- 2009 134 687
- US-A1- 2012 049 501
- US-A1- 2014 166 842
- US-B1- 6 371 545

## Description

L'invention a trait à la fixation d'une rangée de sièges au soubassement d'un véhicule automobile, et plus particulièrement à la fixation avant de ces sièges, ainsi qu'à la fixation arrière desdits sièges.

Pour permettre au conducteur de conduire convenablement son véhicule et transporter des passagers, un véhicule automobile peut comprendre, en fonction du modèle, une, deux voire trois rangées de sièges au sein de l'habitacle.

Dans la suite de la description, on s'intéressera plus particulièrement aux véhicules ayant une deuxième rangée de sièges, communément dénommé les sièges de rang 2 aptes à recevoir des passagers, étant entendu que la première rangée correspond à la combinaison d'un siège conducteur et d'un siège passager, positionnés latéralement côte à côte.

La deuxième rangée de sièges est située derrière la première rangée, chaque siège pouvant se présenter sous la forme d'un siège individuel (également appelé siège indépendant), ou sous la forme d'un siège collectif, plus connu sous le terme banquette.

Par définition, un siège individuel représente une place et est, autrement dit, destiné à recevoir un unique passager, et comprend généralement une assise et un dossier. Contrairement au siège individuel, un siège collectif est un siège ayant au moins deux places, et est, autrement dit, destiné à recevoir au moins deux passagers ; il comprend généralement une assise commune et un dossier commun, ou des dossiers individuels.

Par la suite, un siège individuel et un siège collectif seront référencés sous la désignation commune de siège.

Un siège est par exemple fixé de sorte que les passagers sont positionnés vers l'avant du véhicule dans le sens d'avancée de celui-ci par l'intermédiaire de semelles avant, de semelles arrière et d'une ou plusieurs embases arrière, positionnées respectivement aux extrémités libres de jambes avant prévues au niveau de la partie avant de l'assise et de jambes arrière prévues pour supporter la partie arrière de l'assise et le(s) dossier(s). Plus précisément, les semelles avant sont articulées aux extrémités libres des jambes avant, les deux semelles arrière sont articulées aux extrémités libres des deux jambes arrière bordant latéralement la rangée de sièges, et chaque embase arrière est articulée communément aux extrémités libres de deux jambes arrière de sièges distincts, accolés l'un à l'autre.

Les sièges de la deuxième rangée ont, par exemple, leurs semelles avant fixées sur la marche intermédiaire de la planche à talon et leurs semelles arrière et embases fixées sur le plancher arrière. Dans la suite de la description, on s'intéressera plus particulièrement à la fixation des semelles avant, arrières et des embases sur le soubassement.

Un véhicule automobile comprend une caisse incluant un soubassement sur lequel sont fixés les différents sièges. De manière générale, le soubassement comprend un plancher avant, un plancher arrière, surélevé par rapport au plancher avant et une planche à talon, située entre le plancher avant et le plancher arrière. La planche à talon est, par exemple étagée de sorte à former une marche intermédiaire sensiblement horizontale. Les sièges de la deuxième rangée ont, par exemple, leurs semelles avant fixées sur la marche intermédiaire de la planche à talon et leurs semelles arrière fixées sur le plancher arrière.

Le document US 2012/0049501 décrit une caisse de véhicule automobile, incluant un soubassement comportant un plancher avant, délimité latéralement par deux longerons, et un plancher arrière, surélevé par rapport au plancher avant, et relié à celui-ci par une planche à talon ; au moins un siège de rang 1 comprenant une semelle avant de fixation à la caisse.

Pour un seul et même modèle de véhicule, de manière traditionnelle, les constructeurs automobiles peuvent proposer différentes longueurs de véhicule, dans le but par exemple de satisfaire les clients désireux d'avoir un confort supplémentaire pour les passagers assis à la deuxième rangée, et plus précisément d'accroître l'espace alloué aux jambes des passagers assis sur les sièges de la deuxième rangée.

En effet, pour un modèle déterminé, un soubassement dit standard et un soubassement dit rallongé sont identiques, à l'exception d'une rallonge intégrée au plancher avant, en amont de la planche à talon. Le positionnement des sièges de la deuxième rangée par rapport au plancher arrière reste similaire, quel que soit le soubassement, permettant d'obtenir un accroissement de l'espace alloué aux jambes des passagers de la deuxième rangée équivalent à la largeur de la rallonge. On appellera un tel positionnement des sièges sur un soubassement allongé, configuration primaire.

Le choix d'intégrer la rallonge dans le plancher avant permet également de conserver, quel que soit le soubassement, les mêmes interfaces de fixation du train arrière au soubassement du véhicule, et d'éviter un redimensionnement structurel.

Les véhicules munis d'un soubassement dit rallongé peuvent avoir pour vocation à transporter des passagers munis de bagages, les conducteurs de ces véhicules privilégiant ainsi le volume du coffre au confort des passagers.

Tout en conservant une structure de soubassement identique, pour un soubassement rallongé, les constructeurs automobiles souhaitent ainsi proposer à leurs clients une alternative, dans laquelle la deuxième rangée de sièges est repositionnée de sorte que l'espace alloué aux jambes des passagers assis à la deuxième rangée soit équivalent entre un soubassement standard et un soubassement rallongé, et ainsi maximiser le volume du coffre sur le véhicule rallongé. Un tel positionnement des sièges est alors appelé configuration secondaire sur soubassement allongé.

Un premier objectif est de proposer un ensemble comprenant une caisse de véhicule automobile incluant un soubassement et au moins un siège comportant une semelle avant, le siège étant positionné de sorte à maximiser le volume du coffre, cet ensemble comprenant en outre des moyens de fixation permettant de fixer la semelle avant du siège au soubassement.

Un deuxième objectif est de proposer un véhicule automobile comprenant un ensemble répondant à l'objectif exprimé ci-dessus.

A cet effet, il est proposé, en premier lieu, un ensemble comprenant:
- une caisse de véhicule automobile, cette caisse incluant un soubassement comportant un plancher avant délimité latéralement par deux longerons et un plancher arrière surélevé par rapport au plancher avant et relié à celui-ci par une planche à talon ;
- au moins un siège de deuxième rangée comprenant une semelle avant de fixation à la caisse ;
dans lequel :
- la semelle avant est située en regard du plancher avant et à proximité de la planche à talon ;
- l'ensemble comprend une traverse fixée à chacune de ses extrémités sur un longeron, et s'étendant au-dessus et écartée du plancher, la semelle avant étant fixée sur la traverse.

Diverses caractéristiques supplémentaires peuvent être prévues, seules ou en combinaison :
- la traverse a en section longitudinale un profil en U, et comprend une âme et deux ailes en regard l'une de l'autre, la semelle avant étant fixée sur l'âme ;
- les ailes de la traverse sont en appui sur une face supérieure d'un tunnel du plancher avant ;
- la traverse comprend, à chaque extrémité latérale, une griffe, chaque griffe étant en appui sur un bossage faisant saillie d'une façade supérieure du longeron correspondant ;
- chaque griffe a en section transversale un profil en L, et comprend un tronçon inférieur sensiblement vertical et un tronçon supérieur sensiblement horizontal, le tronçon inférieur reliant l'âme et le tronçon supérieur, le tronçon supérieur étant en appui sur le bossage du longeron correspondant ;
- l'ensemble comprend deux pions de centrage, chaque pion de centrage traversant simultanément le tronçon supérieur et le bossage du longeron correspondant ;
- la traverse s'étend entre les deux longerons au-dessus et écartée dudit plancher avant, c'est-à-dire de manière suspendue au-dessus du plancher sur une portion des longerons délimitant une rallonge du plancher avant, cette rallonge étant placée en amont de la planche à talon, la semelle avant venant ainsi se fixer sur la traverse.

Ainsi, de manière avantageuse, les sièges de la deuxième rangée qui ont, par exemple, leurs semelles avant fixées sur la marche intermédiaire de la planche à talon dans le cas d'un soubassement standard ou d'un soubassement allongé en configuration primaire, ont grâce à l'ensemble selon l'invention, leurs semelles avant fixées sur la traverse avec un soubassement rallongé en configuration secondaire, et ce, de manière simple en ajoutant simplement la traverse suspendue entre les longerons.

Selon une forme de réalisation préférée de l'invention, on propose également un ensemble comprenant en outre des moyens de fixation réglable, permettant de fixer une embase arrière du siège au soubassement, en fonction de la position du siège choisie.

Selon un mode de réalisation préféré de l'invention, l'ensemble comprend donc :
- une caisse de véhicule automobile, cette caisse incluant un soubassement comportant un plancher avant délimité latéralement par deux longerons et un plancher arrière surélevé par rapport au plancher avant et relié à celui-ci par une planche à talon ;
- un siège de deuxième rangée comprenant une embase arrière de fixation à la caisse ; ledit ensemble comprenant en outre
- un rail, solidaire du soubassement, ce rail définissant plusieurs zones de fixation;
- un patin, rapporté et fixé dans le rail au niveau de l'une des zones de fixation, l'embase arrière d'un siège étant fixée au patin.

De préférence, dans ce mode de réalisation, diverses caractéristiques supplémentaires peuvent être prévues, seules ou en combinaison :
- l'embase arrière est en contact avec une surface supérieure du plancher arrière et le rail est fixé sur une surface inférieure du plancher arrière, les surfaces supérieure et inférieure étant opposées ;
- l'embase arrière est fixée par une vis à un écrou rapporté et fixé sur le patin, cette vis traversant simultanément une ouverture de l'embase arrière, une lumière du plancher arrière et un orifice du patin ;
- l'orifice est pratiqué dans une base sensiblement horizontale du patin, la base présentant une face inférieure en regard du rail, l'écrou comprenant une façade supérieure à partir de laquelle un anneau fait saillie, la façade supérieure étant en appui avec la face inférieure et l'anneau étant introduit dans l'orifice ;
   le rail a en section transversale un profil en U et comprend une âme et deux ailes, en regard l'une de l'autre ;
- le patin comprend :
   - deux parois en saillie verticale par rapport à la base et en regard l'une de l'autre;
   - deux languettes verticales en regard l'une de l'autre et faisant saillie de bords latéraux de chaque paroi, les languettes verticales étant en appui avec les ailes ;
   - une languette horizontale faisant saillie du bord inférieur de chaque paroi, les languettes horizontales étant en appui avec l'âme ; les languettes verticales étant fixées aux ailes et les languettes horizontales étant fixées à l'âme ;
- les languettes verticales sont soudées par points aux ailes et les languettes horizontales sont soudées par points à l'âme ;
- l'embase arrière est positionnée par rapport au plancher arrière par l'intermédiaire d'un pion de centrage, ce pion de centrage traversant simultanément un passage de l'embase arrière et une fenêtre du plancher arrière.

Ainsi de manière avantageuse, les sièges de la deuxième rangée peuvent être positionnés soit sur un soubassement standard ou soubassement allongé en configuration primaire soit en configuration secondaire de manière simple sans modification structurelle du soubassement.
Selon un autre mode de réalisation préféré de l'invention, l'ensemble comprend donc une caisse de véhicule automobile, incluant un soubassement comportant un plancher avant délimité latéralement par deux longerons et un plancher arrière surélevé par rapport au plancher avant et relié à celui-ci par une planche à talon ; le soubassement comportant deux plans inclinés, situés de part et d'autre de la planche à talon; au moins un siège comprenant une semelle arrière de fixation à la caisse ; ensemble dans lequel :
- la semelle arrière est au moins pour partie située en regard d'un des plans inclinés ;
- l'ensemble comprend un support rapporté et fixé au soubassement, la semelle arrière étant fixée sur le support.

De préférence, diverses caractéristiques supplémentaires de ce mode de réalisation peuvent être prévues, seules ou en combinaison :
- le support comprend un corps biseauté, ce corps comportant une surface inférieure, parallèle à une face supérieure du plan incliné, et une surface supérieure sensiblement horizontale, sur laquelle est fixée la semelle arrière ;
- le support comprend en outre :
   - une patte inférieure, en saillie par rapport au corps, la patte inférieure étant sensiblement parallèle au plan incliné et en contact avec la face supérieure du plan incliné;
   - une patte supérieure, en saillie par rapport au corps, la patte supérieure étant sensiblement parallèle au plancher arrière et en contact avec une façade supérieure du plancher arrière ;
- le support comprend également:
   - un pion en saillie par rapport à la patte inférieure, ce pion étant apte à venir s'introduire dans un orifice pratiqué dans le plan incliné;
   - un clip primaire, au niveau de la patte supérieure, ce clip primaire étant apte à venir se clipper dans une ouverture pratiquée dans le plancher arrière ;
- l'ensemble comprend :
   - un boulon primaire, fixant simultanément la patte supérieure, le plancher arrière et un renfort supérieur en appui sur une façade inférieure du plancher arrière, la façade inférieure étant opposée à la façade supérieure.
   - un boulon secondaire, fixant simultanément la patte inférieure, le plan incliné et un renfort inférieur en appui sur une face inférieure du plan incliné, la face inférieure étant opposée à la face supérieure ;
   - la semelle arrière comprend un clip secondaire, apte à venir se clipper dans une échancrure pratiquée dans le support, au niveau de la surface supérieure ;
   - l'ensemble comprend un boulon tertiaire, fixant simultanément la semelle arrière et le support.

Ainsi de manière avantageuse, lorsqu'on est dans le cas d'un soubassement allongé et que l'on souhaite positionner les sièges de rang 2 en configuration secondaire, la semelle arrière des sièges se trouve alors en regard de pans inclinés, et le support permet cette configuration.

L'ensemble comportant la traverse, l'ensemble comportant un rail et un patin ainsi que l'ensemble comportant un support en regard des pans inclinés peuvent être avantageusement utilisés en combinaison les uns avec les autres, à savoir une combinaison des trois ou en combinaison deux à deux ou encore indépendamment les uns des autres.

L'invention vise également un véhicule comprenant un ou des ensembles tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile (en traits pointillés) comprenant un ensemble (en traits continus) comportant un soubassement, sur lequel sont fixés des sièges individuels ;
- la figure 2a est une vue en perspective d'un soubassement dit standard sur lequel sont fixés trois sièges individuels ;
- la figure 2b est une vue en perspective du soubassement dit rallongé, dans la configuration secondaire sur lequel sont fixés trois sièges individuels ;
- la figure 3 est une vue en perspective d'un soubassement allongé, sur lequel sont fixés trois sièges individuels, avec un médaillon de détail à échelle agrandie ;
- la figure 4 est une vue en perspective de détail, éclatée, de la fixation d'une traverse au soubassement, cette traverse supportant des semelles avant des sièges individuels ;
- la figure 5 est une vue en perspective de dessus de la traverse ;
- la figure 6 est une vue en perspective, éclatée, coupée en partie, de la fixation d'une embase arrière commune à deux sièges sur le soubassement dit standard de la figure 2 ;
- la figure 7 est une vue en perspective, éclatée, coupée en partie, de la fixation d'une embase arrière commune à deux sièges sur le soubassement dit rallongé dans la configuration secondaire ;

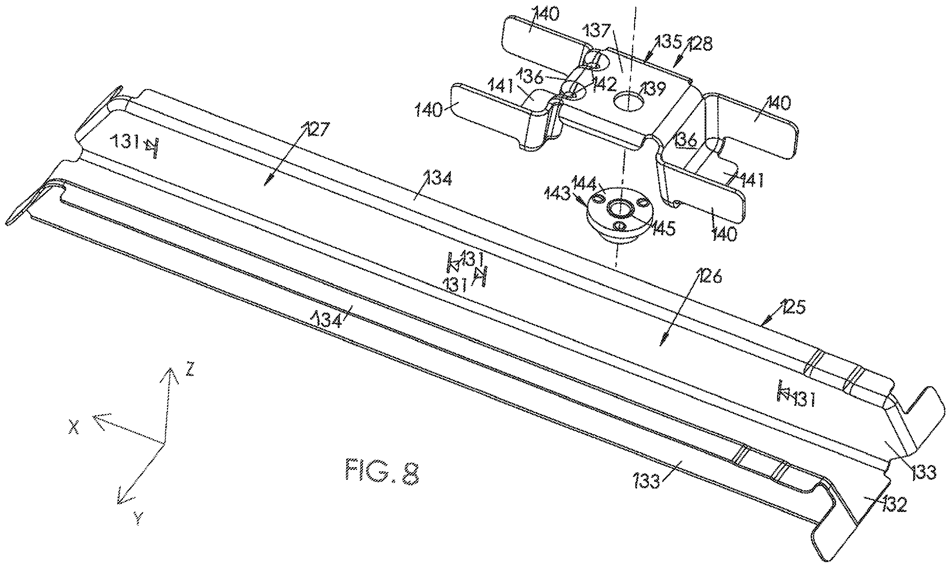

- la figure 8 est une vue en perspective, éclatée, d'un rail et d'un patin nécessaires à la fixation d'une embase arrière ;
- la figure 9 est une vue en perspective d'un soubassement sur lequel sont fixés trois sièges individuels, selon la figure 3, avec un médaillon de détail à échelle agrandie ;

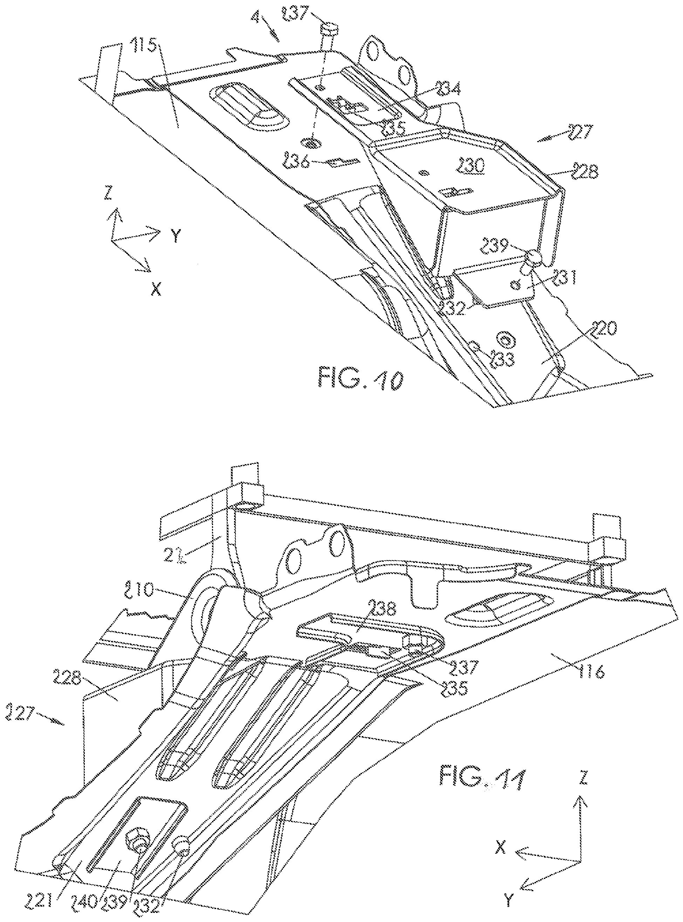

- la figure 10 est une vue en perspective, éclatée, de la fixation d'un support sur le soubassement, ce support permettant la fixation d'une semelle arrière d'un siège individuel latéral ;
- la figure 11 est une vue en perspective de dessous de la fixation du support sur le soubassement ;
- la figure 12 est une vue en perspective, éclatée, de la fixation de la semelle arrière sur le support.

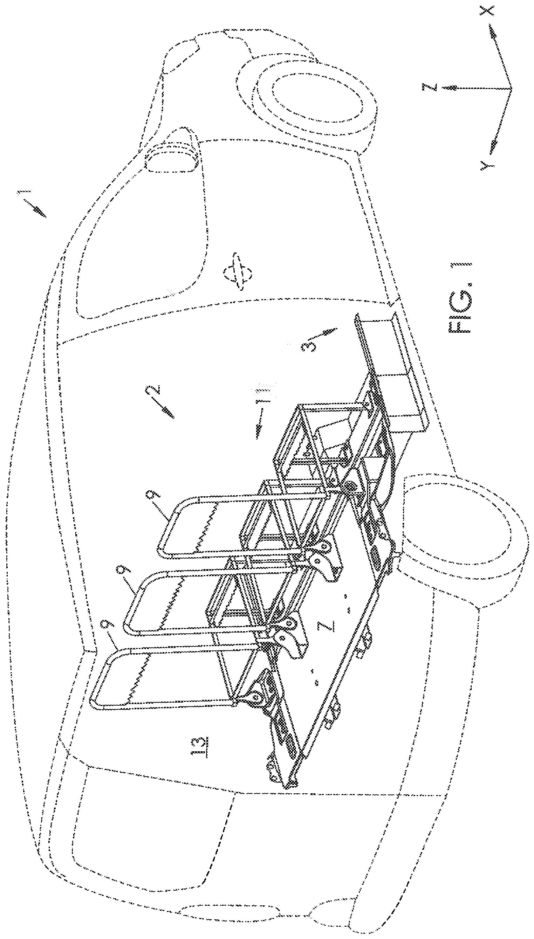

Sur la figure 1 est représenté un véhicule 1 automobile. Il s'agit en l'espèce d'un véhicule 1 particulier de type "ludospace" (contraction de "ludique" et "monospace"), l'exemple illustré n'étant en rien limitatif.

On définit par rapport au véhicule 1 un repère orthogonal XYZ, comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal.

Dans la description et en référence au repère défini ci-dessus, les termes « longitudinal » ou « longitudinalement » font référence à une direction parallèle à l'axe X, les termes « transversal » ou « transversalement » font référence à une direction parallèle à l'axe Y, et les termes « vertical » ou « verticalement » font référence à une direction parallèle à l'axe Z.

La longueur du véhicule 1 est définie longitudinalement et, autrement dit, selon l'axe X.

Le véhicule 1 comprend un ensemble 2 incluant:
- une caisse 3, incluant un soubassement 4 comportant un plancher 5 avant, délimité latéralement par deux longerons 6, et un plancher 7 arrière, surélevé par rapport au plancher 5 avant et relié à celui-ci par une planche 8 à talon;
- au moins un siège 9 comprenant une semelle 10 avant de fixation à la caisse 3.

Le soubassement 4 matérialise la séparation entre l'intérieur (autrement dit l'habitacle) et l'extérieur du véhicule 1.

Selon le mode de réalisation représenté sur les figures, l'ensemble 2 comprend, au sein de l'habitacle, une première rangée de sièges (non représentée) et une deuxième rangée 11 de sièges 9, ces rangées de sièges 9 étant fixées sur le soubassement 4 du véhicule 1.

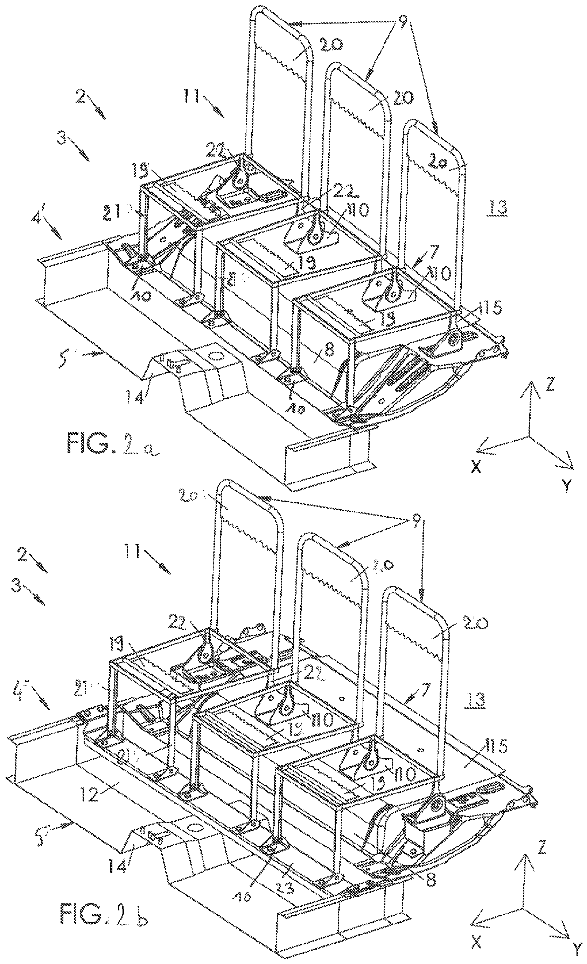

Sur la figure 2a est représentée l'implantation de la deuxième rangée 11 de sièges 9 sur un soubassement 4' dit standard.

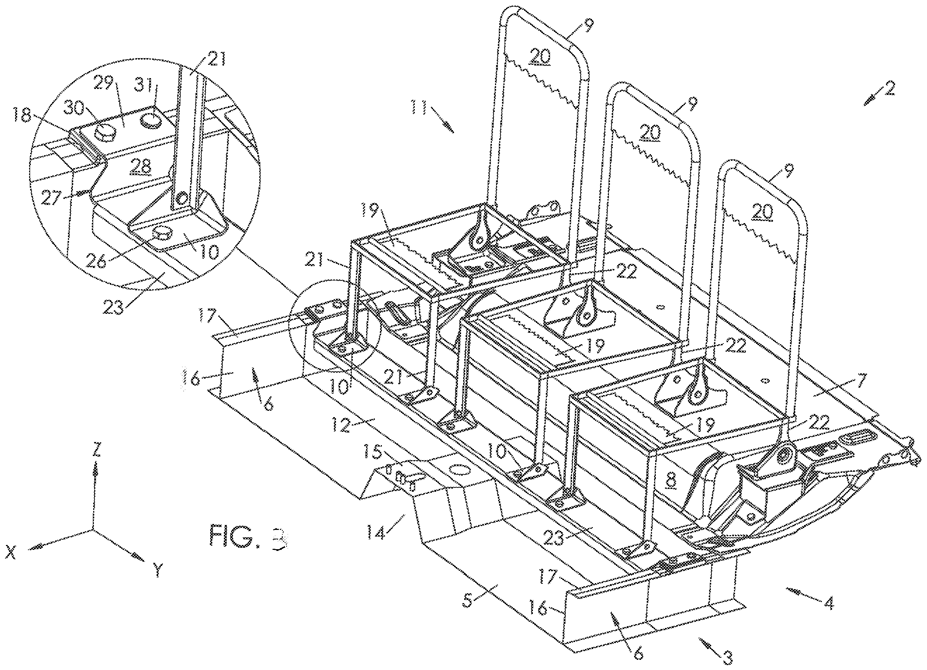

Sur les figures 2a et 3 est représentée l'implantation de la deuxième rangée 11 de sièges 9 sur un soubassement 4 allongé de configuration secondaire.

Sur un soubassement 4 allongé, la deuxième rangée 11 de sièges 9 peut être positionnée dans une configuration primaire (non représentée mais équivalente à une implantation sur un soubassement de type standard visible figure 2a), dans laquelle l'espace alloué aux jambes des passagers assis sur les sièges 9 de la deuxième rangée 11 est accru, en comparaison au soubassement 4' standard, les sièges 9 étant implantés de la même façon sur le soubassement 4. La deuxième rangée de sièges peut également être implantée dans une configuration secondaire (représentée sur les figures 2b et 3), dans laquelle le volume du coffre 13 est accru en comparaison au soubassement 4' standard.

En effet, selon la configuration primaire, en comparaison au soubassement 4' standard, l'espace alloué aux jambes des passagers est augmenté, proportionnellement à la largeur de la rallonge 12 (mesurée suivant l'axe X), puisque le positionnement longitudinal des sièges 9 de la deuxième rangée 11 par rapport au plancher 7 arrière est identique.

Selon la configuration secondaire, en comparaison au soubassement 4' standard, le volume du coffre 13 est augmenté, proportionnellement à la largeur de la rallonge 12 (mesurée suivant l'axe X), puisque le positionnement longitudinal des sièges 9 de la deuxième rangée 11 par rapport aux sièges de la première rangée est identique.

L'intégration de la rallonge 12 au plancher 5 avant en amont de la planche 8 à talon est un choix structurel permettant d'éviter, d'une part, une redéfinition des interfaces de fixation du train arrière, et, d'autre part, un redimensionnement structurel du soubassement 4 rallongé.

Selon le mode de réalisation représenté sur la figure 2b, le soubassement 4 correspond à un soubassement dit rallongé et, autrement dit, un soubassement comportant un plancher 5 avant plus long en comparaison à un soubassement dit standard 4' représenté à la figure 2a.Le soubassement 4 rallongé est destiné, par exemple et selon la configuration représentée sur les figures, aux clients voulant notamment bénéficier d'un volume de coffre 13 plus important. En effet, l'intégration d'une rallonge 12 au dans le plancher 5 avant, en amont de la planche 8 à talon, permet d'accroître le volume du coffre 13, proportionnellement à la largeur de la rallonge 12 (mesurée suivant l'axe X), puisque le positionnement longitudinal des sièges 9 de la deuxième rangée 11 sur ce soubassement 4 rallongé est défini de sorte que le positionnement longitudinal des sièges 9 de la deuxième rangée, 11 par rapport aux sièges de la première rangée, soit identique sur le soubassement standard (figure 2a) et le soubassement 4 rallongé (figures 2b et3).

Selon le mode de réalisation représenté sur les figures, les planchers 5, 7 avant et arrière sont sensiblement horizontaux. Le plancher 5 avant comprend un tunnel 14 central ayant en section transversale (suivant un plan YZ) un profil en U, ce tunnel 14 étant délimité dans une portion supérieure par une face 15 supérieure sensiblement horizontale, et étant par exemple destiné au passage d'une transmission et/ou d'une ligne d'échappement.

Chaque longeron 6 a en section transversale (suivant un plan YZ) un profil U, et comprend ainsi une paroi 16 verticale délimité par une façade 17 supérieure, horizontale, faisant saillie de la paroi 16 verticale vers l'extérieur du véhicule 1. Chaque longeron 6 comprend un bossage 18 faisant saillie de la façade 17 supérieure, ce bossage 18 étant localisé sur une portion des longerons 6 délimitant la rallonge 12 du plancher 5 avant.

Selon l'exemple illustré, la deuxième rangée 11 de sièges se compose de trois sièges 9 individuels (ou sièges indépendants), disposés transversalement les uns à côté des autres.

L'exemple illustré n'est en rien limitatif, en effet la deuxième rangée 11 de sièges pourrait par exemple se composer d'un siège individuel et d'un siège collectif, plus connu sous le terme banquette, ou bien encore d'un unique siège collectif. Pour rappel, on entend par siège collectif, un siège ayant au moins deux places comprenant une assise commune et un dossier commun, ou des dossiers individuels.

Plus précisément, selon le mode de réalisation représenté sur les figures, chaque siège 9 comprend une assise 19 et un dossier 20 supportés par une paire de jambes 21 avant et une paire de jambes 22 arrière.

Pour des raisons de clarté, la matelassure et l'habillage des sièges 9 ne sont pas représentés, ni les différents dispositifs de réglage permettant, par exemple, de positionner un siège 9 en configuration tablette ou portefeuille.

Dans la suite de la description, on s'intéressera plus particulièrement à la fixation avant des sièges 9 de la deuxième rangée 11.

Selon le mode de réalisation illustré sur la figure 3, chaque siège 9 comprend deux semelles 10 avant articulées aux extrémités libres des jambes 21 avant et via lesquelles le siège 9 est fixé au soubassement 4.

Il est entendu que le nombre de semelles 10 avant par siège 9 dépend de la nature du siège, à savoir siège individuel ou siège collectif. En effet, un siège collectif ayant deux places peut par exemple être fixé au soubassement 4 par uniquement deux semelles 10 avant.

Chaque semelle 10 avant est située en regard du plancher 5 avant et à proximité de la planche 8 à talon. L'ensemble 2 comprend une traverse 23 fixée à chacune de ses extrémités sur un longeron 6, au-dessus du plancher avant 5 et écartée de celui-ci, comme suspendue entre les longerons 6, chaque semelle 10 avant étant fixée sur la traverse 23.

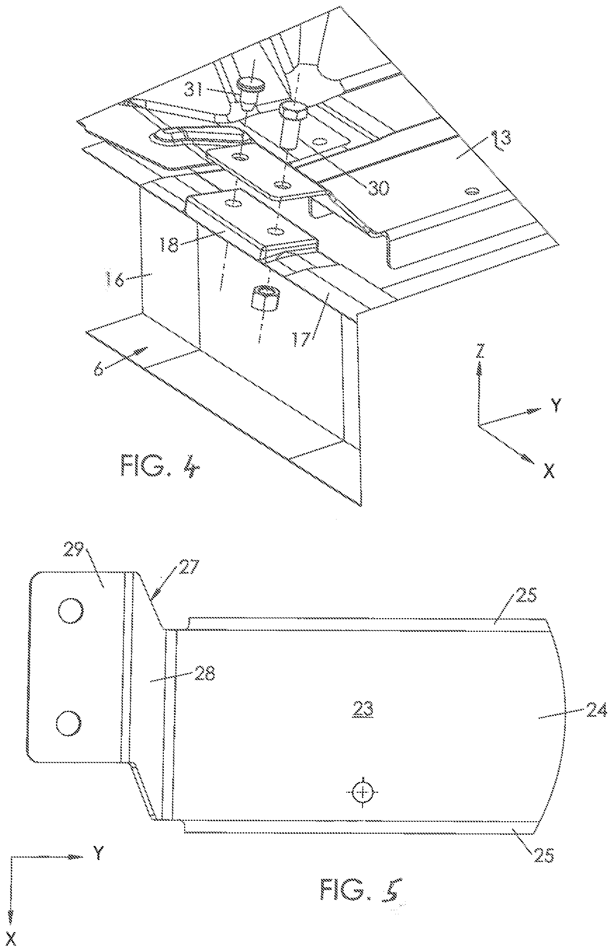

Plus précisément, selon le mode de réalisation représenté sur les figures 2b, 3 et 4, la traverse 23 a, en section longitudinale (suivant un plan XZ) un profil en U, et comprend ainsi une âme 24 et deux ailes 25 en regard l'une de l'autre, chaque semelle 10 avant étant fixée sur l'âme 24 via un boulon 26 primaire.

La traverse 23 comprend, à chaque extrémité latérale, une griffe 27 ayant, en section transversale (suivant un plan YZ), un profil en L, chaque griffe 27 comprenant ainsi un tronçon 28 inférieur sensiblement vertical et un tronçon 29 supérieur sensiblement horizontal, le tronçon 28 inférieur reliant l'âme 24 et le tronçon 29 supérieur. La traverse 23 est fixée sur les longerons 6 par l'intermédiaire des griffes 27, en effet chaque tronçon 29 supérieur d'une griffe 27 est en appui et fixé sur le bossage 18 du longeron 6 correspondant, via un boulon 30 secondaire.

Tel qu'illustré sur la figure 3, la traverse 23 est positionnée sur le soubassement 4 par l'intermédiaire de deux pions 31 de centrage, chaque pion 31 de centrage traversant simultanément le tronçon 29 supérieur et le bossage 18 du longeron 6 correspondant. La traverse 23 s'étend ainsi d'un longeron 6 à l'autre en étant suspendue au-dessus et écartée du soubassement avant 4 mais tel qu'illustré sur la figure 2, les ailes 25 de la traverse 23 sont en appui sur le tunnel 14 central, cette architecture permettant de limiter les efforts exercés par la traverse 23 sur les longerons 6.

Selon un mode de réalisation non représenté, en amont de sa fixation, chaque semelle 10 avant peut être positionnée sur la traverse 23 via, par exemple, un pion de centrage traversant simultanément la semelle 10 avant et l'âme 24.

L'ensemble 2 qui vient d'être décrit offre les avantages suivants.

La fixation des semelles 10 avant des sièges 9 de la deuxième rangée 11 au soubassement 4 par une traverse 23 permet de répondre au repositionnement des sièges 9, dans le but de maximiser le volume du coffre 13 du véhicule 1.

Le fait que la traverse 23 soit un élément rapporté permet de conserver une unique référence de soubassement 4 rallongé, quel que soit le choix du client, à savoir privilégier l'espace alloué aux jambes des personnes assises sur la deuxième rangée 11 (dans ce cas les semelles 10 restent en appui sur la planche à talon 8 cf. figure 2a) ou privilégier le volume utile du coffre 13.

Le profil de la traverse 23 et sa suspension permet de limiter la masse globale du véhicule 1, au bénéfice de la consommation en carburant et des émissions polluantes.

Dans la suite de la description, on s'intéressera plus particulièrement à la fixation arrière des sièges 9 de la deuxième rangée 11. Chaque siège 9 comprend une embase 110 arrière de fixation à la caisse 3.

Selon le mode de réalisation illustré sur les figures, la deuxième rangée 11 comprend deux embases 110 arrière, chaque embase 110 arrière étant communément articulée avec l'extrémité libre d'une jambe 22 arrière du siège 9 central et avec l'extrémité libre d'une jambe 22 arrière d'un siège 9 latéral. En position, l'embase 110 arrière est en appui sur la surface 115 supérieure du plancher 7 arrière.

L'embase 110 arrière comprend, d'une part, un passage 121 de forme circulaire, apte à être traversé par un pion 122 de centrage, nécessaire au positionnement de l'embase 110 arrière par rapport au plancher 7 arrière, et, d'autre part, une ouverture 123 de forme circulaire apte à être traversée par une vis 124, nécessaire à la fixation de l'embase 110 arrière au plancher 7 arrière.

Il est entendu que le nombre d'embases 110 arrière dépend de la nature des sièges composant la deuxième rangée 11, à savoir siège individuel ou siège collectif. En effet, en supposant d'une part que la deuxième rangée 11 comprenne un siège collectif ayant deux places et un siège 9 individuel, et d'autre part que le siège collectif comprenne uniquement deux jambes 22 arrière, on peut aisément imaginer que la deuxième rangée 11 comprenne uniquement une embase 110 arrière.

Dans la suite de la description, on s'intéressera à la fixation des embases 110 arrière au soubassement 4, 4' et plus particulièrement au plancher 7 arrière.

L'ensemble 2 comprend en outre:
- un rail 25 solidaire du soubassement 4, ce rail 125 définissant plusieurs zones 126, 127 de fixation;
- un patin 128, rapporté et fixé dans le rail 125 au niveau de l'une des zones 126, 127 de fixation, l'embase 110 arrière étant fixée au patin 128.

Un rail 125 et un patin 128 sont nécessaires pour la fixation d'une embase 110 arrière au soubassement 4.

Ainsi, selon le mode de réalisation représenté sur les figures, l'ensemble 2 comprend deux rails 125 et deux patins 128. Chaque rail 125 comprend une zone 126 de fixation primaire, utilisée pour le soubassement 4' standard et pour le soubassement 4 rallongé en configuration primaire, et une zone 127 de fixation secondaire, utilisée pour le soubassement 4 rallongé en configuration secondaire.

Pour chaque zone 126, 127 de fixation, le plancher 7 arrière comporte une lumière 129 et une fenêtre 130 de forme circulaire nécessaires, comme nous le verrons dans la suite de la description, à la fixation et au positionnement de l'embase 110 arrière.

Les zones 126, 127 de fixation primaire et secondaire sont avantageusement délimitées sur le rail 125 par l'intermédiaire de marquages 131 visuels, permettant à l'opérateur de positionner correctement le patin 128 sur le rail 125 en amont de sa fixation, selon les caractéristiques intrinsèques du véhicule 1.

L'exemple illustré sur les figures n'est en rien limitatif, les zones 126, 127 de fixation primaire et secondaire pourraient être délimitées par différentes butées, ou bien encore par des trous utilisés pour la fixation.

Selon le mode de réalisation illustré sur les figures, le rail 125 a en section transversale (suivant un YZ) un profil en U et comprend ainsi une âme 132 et deux ailes 133 en regard l'une de l'autre, l'âme 132 étant sensiblement horizontale et les ailes 133 étant sensiblement verticales. Chaque rail 125 comprend en outre deux rebords 134, chaque rebord 134 étant sensiblement parallèle à l'âme 132 et faisant saillie d'une extrémité libre d'une aile 133. Les rebords 134 s'étendent ainsi latéralement, depuis les ailes 133 dans des sens opposés.

Selon le mode de réalisation illustré sur les figures, un patin 128 comprend une base 135 plane sensiblement horizontale et deux parois 136 en saillie verticale par rapport à la base 135 et en regard l'une de l'autre. La base 135 présente une face 137 supérieure et une face 138 inférieure opposées, et comprend un orifice 139.

Le patin 128 comprend d'une part, pour chaque paroi 136, deux languettes 140 verticales, en regard l'une et l'autre, les languettes 140 verticales faisant saillie de manière longitudinale depuis les bords latéraux de la paroi 136 correspondante, dans un sens opposé à la base 135.

Le patin 128 comprend d'autre part, pour chaque paroi 136, une languette 141 horizontale, faisant saillie de manière longitudinale depuis le bord inférieur de la paroi 136 correspondante, dans un sens opposé à la base 135. Afin de renforcer structurellement le patin 128, l'une des parois 136 comporte deux nervures 142 verticales.

Quelle que soit la zone 126, 127 de fixation, en position, les languettes 140, 141 horizontales et verticales sont respectivement en appui avec l'âme 132 et les ailes 133 du rail 125. Après avoir été positionné dans la zone 126, 127 de fixation désirée, le patin 128 est par exemple soudé par points, sur le rail 125, au niveau de ces différentes languettes 140, 141 verticales et horizontales.

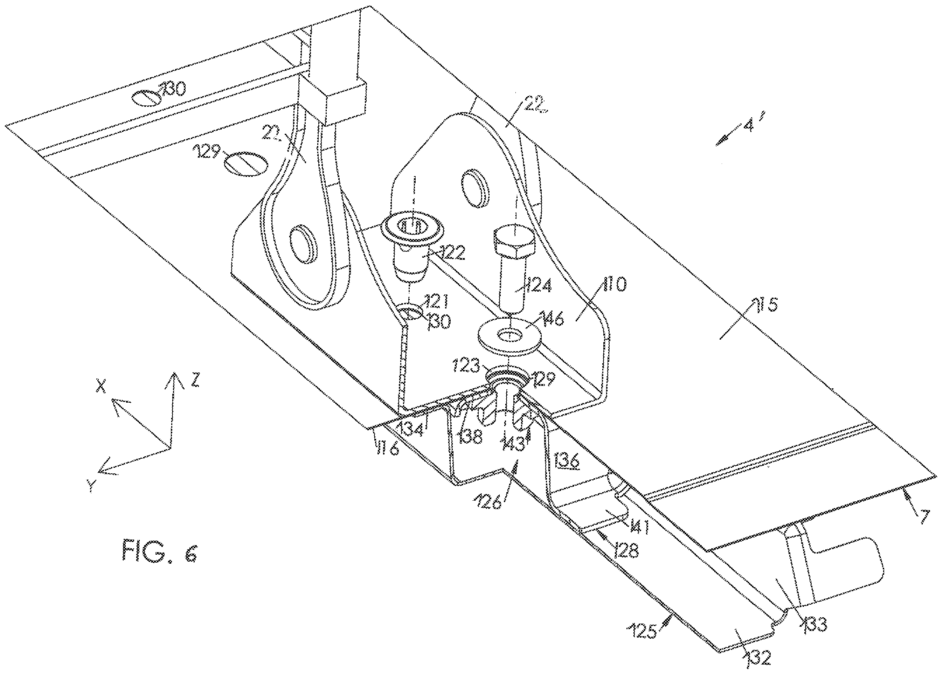

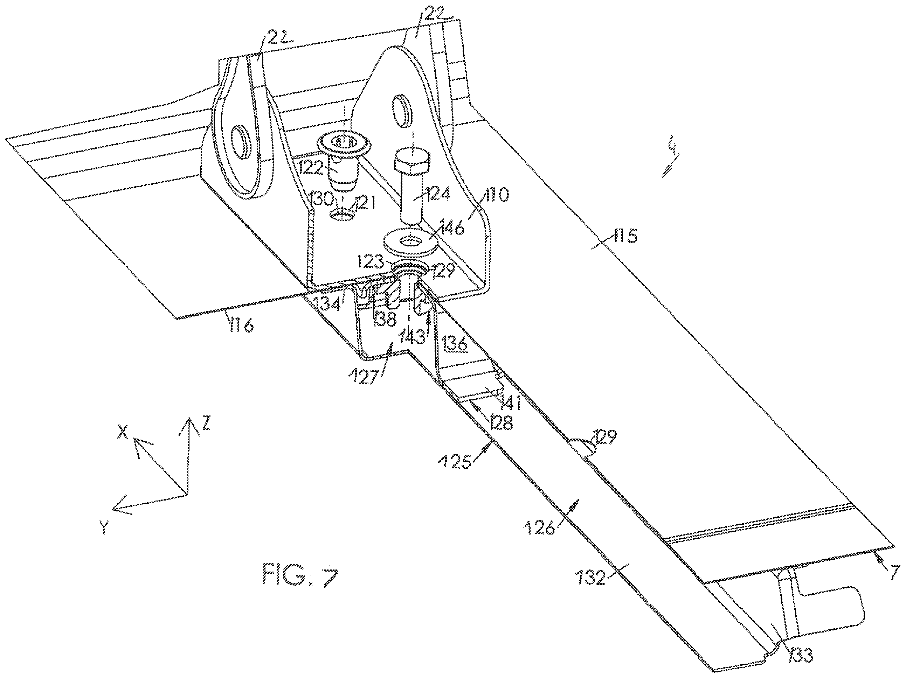

Selon le mode de réalisation illustré sur les figures, l'ensemble 2 comporte, pour chaque patin 128, un écrou 143 fixé sur celui-ci. L'écrou 143 comporte une façade 144 supérieure sensiblement horizontale et un anneau 145, en saillie verticale par rapport à la façade 144 supérieure. En position, tel qu'illustré sur les figures 6 et 7, la façade 144 supérieure est en appui sur la face 138 inférieure de la base 135, et l'anneau 145 est introduit dans l'orifice 139 de la base 135. L'écrou 143 est, par exemple, soudé au patin 128 sur l'ensemble de sa périphérie.

Selon le mode de réalisation illustré sur les figures, en amont de sa fixation, l'embase 110 arrière est positionnée par l'intermédiaire d'un pion 122 de centrage, traversant simultanément le passage 121 de l'embase 110 arrière et l'une des fenêtres 130 du plancher 7 arrière.

Tel qu'illustré sur les figures 6 et 7, quelle que soit la zone 126, 127 de fixation, en position, les rebords 134 du rail 125 et la face 137 supérieure de la base 135 sont, d'une part, en appui sur la surface 116 inférieure du plancher 7 arrière, et, d'autre part, l'écrou 143 et l'orifice 139 de la base 135 sont centrés sur l'ouverture 123 de l'embase 110 arrière et l'une des lumières 129 du plancher 7 arrière. Le rail 125 est, par exemple, soudé au plancher 7 arrière, via les rebords 134 et sur des éléments extérieurs de la caisse 3. L'embase 110 arrière est fixée par l'intermédiaire d'une vis 124 et d'une rondelle 146, la vis 124 traversant simultanément l'ouverture 123, la lumière 129, l'orifice 139, et coopérant avec l'écrou 143 fixé sur le patin 128.

L'ensemble 2 qui vient d'être décrit offre les avantages suivants.

La fixation des embases 110 arrière (ou de l'embase 110 arrière) des sièges 9 de la deuxième rangée 11 au soubassement 4, par un rail 125 associé à un patin 128 pour chaque embase 110 arrière, permet de répondre aux différents positionnements envisageables des sièges 9, pour un seul et même soubassement 4, à savoir privilégier l'espace alloué aux jambes des personnes assises sur la deuxième rangée 11 ou privilégier le volume du coffre 13.

Le profil du rail 125 et du patin 128 permet de limiter la masse globale du véhicule 1, au bénéfice de la consommation en carburant et des émissions polluantes.

De plus, le soubassement 4 présente deux plans 208 inclinés, situés de part et d'autre de la planche 8 à talon et un siège 9 comprend une semelle arrière de fixation à la caisse 3.

La planche 8 à talon est étagée, de sorte à former une marche 217 sensiblement horizontale, située entre une paroi 218 inférieure et une paroi 219 supérieure, sensiblement verticales. La paroi 219 supérieure relie ainsi la marche 217 et le plancher 7 arrière, tandis que la paroi 218 inférieure relie la marche 217 et le plancher 5 avant. Les plans 208 inclinés sont situés, plus précisément, de part et d'autre de la paroi 219 supérieure de la planche 7 à talon, chaque plan 208 incliné étant verticalement croissant depuis la marche 217 jusqu'au plancher 7 arrière. Chaque plan 208 incliné présente une face 220 supérieure et une face 221 inférieure opposées, respectivement orientées, vers l'intérieur et l'extérieur du véhicule 1.

Dans la suite de la description, on s'intéressera plus particulièrement à la fixation arrière des sièges 9 de la deuxième rangée 11.

Selon le mode de réalisation illustré sur les figures, chaque siège 9 latéral comprend, d'une part, une semelle 210 arrière articulée à l'extrémité libre de la jambe 22 arrière qui est latéralement la plus éloignée du siège 9 central, et, d'autre part, une embase 110 arrière articulée à l'extrémité libre de la jambe 22 arrière qui est latéralement la plus proche du siège 9 central.

Une embase 110 arrière est ainsi à la fois articulée avec une jambe 22 arrière d'un siège 9 latéral et une jambe 22 arrière du siège 9 central.

Dans la suite de la description, on s'intéressera plus particulièrement à la fixation de la semelle 210 arrière d'un siège 9 latéral au soubassement 4.

Chaque semelle 210 arrière est au moins pour partie située en regard d'un des plans 208 inclinés dans le cas d'un soubassement rallongé de type secondaire. L'ensemble 2 comprend un support 227 rapporté et fixé au soubassement 4, la semelle 210 arrière étant fixée sur le support 227.

Plus précisément, selon le mode de réalisation représenté sur les figures, un support 227 comprend un corps 228 biseauté, se présentant sous la forme d'un boîtier triangulaire, et comportant une surface inférieure sensiblement parallèle à la face 220 supérieure du plan 208 incliné et une surface 230 supérieure sensiblement horizontale.

Le support 227 comprend en outre une patte 231 inférieure, en saillie par rapport au corps 228, la patte 231 inférieure étant sensiblement parallèle au plan 208 incliné, et en contact avec la face 220 supérieure du plan 208 incliné.

La patte 231 inférieure comprend un pion 232 en saillie par rapport à la patte 231, et apte à venir s'introduire dans un orifice 233 pratiqué dans le plan 208 incliné, ce pion 232 permettant de positionner le support 227 en amont de sa fixation.

Le support 227 comprend également une patte 234 supérieure en saillie longitudinale par rapport au corps 228, la patte 234 supérieure étant sensiblement parallèle au plancher 7 arrière et en contact avec la façade 115 supérieure du plancher 7 arrière. La patte 234 supérieure comprend un clip 235 primaire, apte à venir se clipper dans une ouverture 236 pratiquée dans le plancher 7 arrière, ce clip 235 primaire permettant de positionner le support 227 en amont de sa fixation. Le support 227 est par exemple un ensemble mécano-soudé, mais cet exemple n'est en rien limitatif : le support 227 pourrait être par exemple réalisé par moulage.

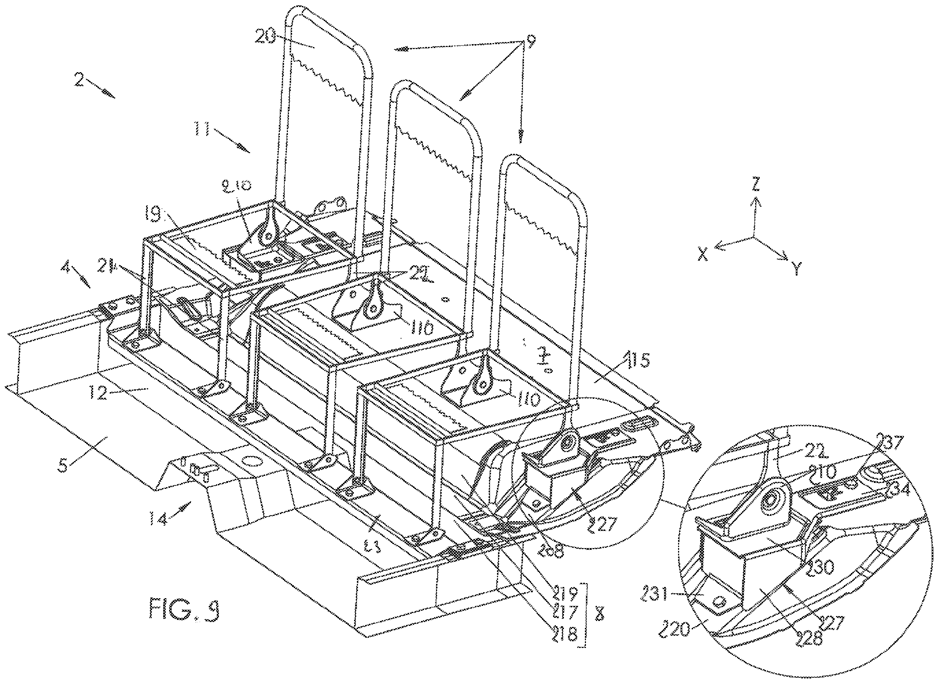

En position, tel qu'illustré sur le médaillon de détail de la figure 9, la surface inférieure du corps 228 et la patte 231 inférieure sont en appui sur la face 220 supérieure du plan 208 incliné, la patte 234 supérieure étant en appui sur le plancher 7 arrière.

Tel qu'illustré sur la figure 9, le support 227 est fixé, d'une part, au soubassement 4 par l'intermédiaire d'un boulon 237 primaire, fixant simultanément la patte 234 supérieure, le plancher 7 arrière et un renfort 238 supérieur en appui sur la façade 116 inférieure du plancher 7 arrière. De la même manière, le support 227 est fixé, d'autre part, au soubassement 4 par l'intermédiaire d'un boulon 239 secondaire, fixant simultanément la patte 231 inférieure, le plan 208 incliné et un renfort 240 inférieur en appui sur la face 221 inférieure du plan 208 incliné. Les renforts 238, 240 supérieur et inférieur (également appelés plaques de matage) permettent de répondre aux normes définies par l'UTAC (Union Technique de l'Automobile, du Motocycle et du Cycle) en cas de chocs du véhicule 1.

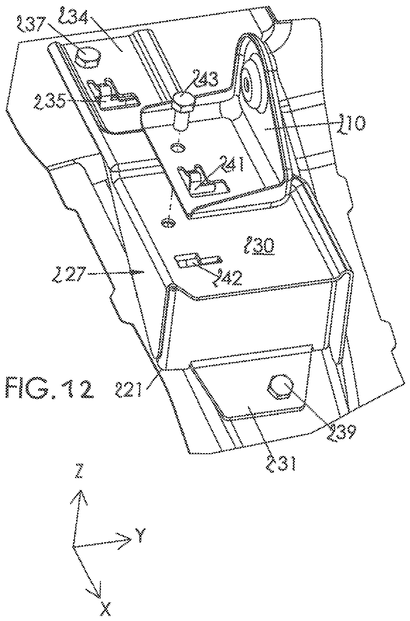

Tel qu'illustré sur la figure 12, chaque semelle 210 arrière est totalement en regard du plan 208 incliné correspondant, et comprend un clip 241 secondaire apte à venir se clipper dans une échancrure 242 pratiquée dans le support 227 au niveau de la surface 230 supérieure, ce clip 241 secondaire permettant de positionner la semelle 210 arrière sur le support 227 en amont de sa fixation. La semelle 210 arrière est en l'occurrence fixée au support 227 par l'intermédiaire d'un boulon 243 tertiaire.

L'ensemble 2 qui vient d'être décrit offre les avantages suivants.

La fixation des semelles 210 arrière des sièges 9 de la deuxième rangée 11 au soubassement 4 par un support 227 permet de répondre au repositionnement des sièges 9, dans le but de maximiser le volume du coffre 13 du véhicule 1.

Le fait que le support 227 soit un élément rapporté permet de conserver une unique référence de soubassement 4 rallongé, quel que soit le choix du client, à savoir privilégier l'espace alloué aux jambes des personnes assises sur la deuxième rangée 11, ou privilégier le volume du coffre 13.

Le profil du support 27 permet de limiter la masse globale du véhicule 1, au bénéfice de la consommation en carburant et des émissions polluantes.

## Revendications

1. Ensemble (2) comprenant:
- une caisse (3) de véhicule (1) automobile, cette caisse (3) incluant un soubassement (4) comportant un plancher (5) avant, délimité latéralement par deux longerons (6), et un plancher (7) arrière, surélevé par rapport au plancher (5) avant, et relié à celui-ci par une planche (8) à talon ;
- au moins un siège (9) de deuxième rangée comprenant une semelle (10) avant de fixation à la caisse (3) ;
l'ensemble (2) comprend une traverse (23) fixée à chacune de ses extrémités sur un longeron (6)
**caractérisé en ce que**
- la semelle (10) avant est située en regard du plancher (5) avant et à proximité de la planche (8) à talon ;
- la traverse (23) s'étendant au-dessus et écartée du plancher (5), la semelle (10) avant étant fixée sur la traverse (23).

2. Ensemble (2) selon la revendication 1, **caractérisé en ce que** la traverse (23) a en section longitudinale un profil en U, et comprend une âme (24) et deux ailes (25) en regard l'une de l'autre, la semelle (10) avant étant fixée sur l'âme (24).

3. Ensemble (2) selon la revendication 2, **caractérisé en ce que** les ailes (25) de la traverse (23) sont en appui sur une face (15) supérieure d'un tunnel (14) du plancher (5) avant.

4. Ensemble (2) selon la revendication 3, **caractérisé en ce que** la traverse (23) comprend à chaque extrémité latérale une griffe (27), chaque griffe (27) étant en appui sur un bossage (18) faisant saillie d'une façade (17) supérieure du longeron (6) correspondant.

5. Ensemble (2) selon l'une quelconque des revendications précédentes comprenant:
- un siège (9) comprenant une embase (110) arrière de fixation à la caisse (3) ;
**caractérisé en ce que** l'ensemble (2) comprend:
- un rail (125), solidaire du soubassement (4',4), ce rail (125) définissant plusieurs zones (126, 127) de fixation;
- un patin (128), rapporté et fixé dans le rail (125), au niveau de l'une des zones (126, 127) de fixation, l'embase (110) arrière étant fixée au patin (128).

6. Ensemble (2) selon la revendication 5, **caractérisé en ce que** l'embase (110) arrière est en contact avec une surface (115) supérieure du plancher (7) arrière, et le rail (125) est fixé sur une surface (116) inférieure du plancher (7) arrière, les surfaces (115, 116) supérieure et inférieure étant opposées.

7. Ensemble (2) selon l'une des revendications 5 et 6, **caractérisé en ce que** le rail (125) a en section transversale un profil en U et comprend une âme (132) et deux ailes (133) en regard l'une de l'autre.

8. Ensemble (2) selon la revendication 7, **caractérisé en ce que** le patin (128) comprend :
- deux parois (136) en saillie verticale par rapport à une base (135) et en regard l'une de l'autre;
- deux languettes (140) verticales en regard l'une de l'autre et faisant saillie de bords latéraux de chaque paroi (136), les languettes (140) verticales étant en appui avec les ailes (133) ;
- une languette (141) horizontale faisant saillie du bord inférieur de chaque paroi (136), les languettes (141) horizontales étant en appui avec l'âme (132) ;
les languettes (140) verticales étant fixées aux ailes (133) et les languettes (141) horizontales étant fixées à l'âme (132).

9. Ensemble (2) selon l'une des revendications 1 à 8, dans lequel :
le soubassement comprend deux plans (8) inclinés, situés de part et d'autre de la planche (8) à talon ; au moins un siège (9) comprenant une semelle (210) arrière de fixation à la caisse (3) ;
**caractérisé en ce que** :
- la semelle (210) arrière est au moins pour partie située en regard d'un des plans (208) inclinés ;
- l'ensemble (2) comprend un support (227), rapporté et fixé au soubassement (4), la semelle (210) arrière étant fixée sur le support (227).

10. Ensemble (2) selon la revendication 9, **caractérisé en ce que** le support (327) comprend un corps (328) biseauté, ce corps (228) comportant une surface inférieure parallèle à une face (220) supérieure du plan (208) incliné et une surface (230) supérieure sensiblement horizontale sur laquelle est fixée la semelle (210) arrière.

11. Ensemble (2) selon l'une quelconque des revendications 9 à 10, **caractérisé en ce que** la semelle (210) arrière comprend un clip (241) secondaire apte à venir se clipper dans une échancrure (242) pratiquée dans le support (227) au niveau de la surface (230) supérieure.

12. Véhicule (1) comprenant un ensemble (2) selon l'une des revendications précédentes.

## Patentansprüche

1. Baugruppe (2), umfassend:
- eine Karosserie (3) eines Kraftfahrzeugs (1), wobei diese Karosserie (3) einen Unterbau (4) einschließt, der einen vorderen Fußboden (5) umfasst, der seitlich von zwei Längsträgern (6) abgegrenzt ist, und einen hinteren Fußboden (7), der bezüglich des vorderen Fußbodens (5) überhöht und mit diesem durch ein Absatzbrett (8) verbunden ist;
- mindestens einen Sitz (9) zweiter Reihe, der eine vordere Unterlage (10) zum Befestigen an der Karosserie (3) umfasst;
wobei die Baugruppe (2) einen Querträger (23) umfasst, der an jedem seiner Enden auf dem Längsträger (6) befestigt ist,
**dadurch gekennzeichnet, dass**
- die vordere Unterlage (10) gegenüber dem vorderen Fußboden (5) und in der Nähe des Absatzbretts (8) liegt;
- wobei sich der Querträger (23) oberhalb des Fußbodens (5) und von diesem beabstandet erstreckt, wobei die vordere Unterlage (10) auf dem Querträger (23) befestigt ist.

2. Baugruppe (2) nach Anspruch 1, **dadurch gekennzeichnet, dass** der Querträger (23) im Längsschnitt ein U-Profil aufweist und eine Seele (24) und zwei Kotflügel (25) einander gegenüber umfasst, wobei die vordere Unterlage (10) auf der Seele (24) befestigt ist.

3. Baugruppe (2) nach Anspruch 2, **dadurch gekennzeichnet, dass** die Kotflügel (25) des Querträgers (23) auf einer oberen Oberfläche (15) eines Tunnels (14) des vorderen Fußbodens (5) in Auflage sind.

4. Baugruppe (2) nach Anspruch 3, **dadurch gekennzeichnet, dass** der Querträger (23) an jedem seitlichen Ende eine Klaue (27) umfasst, wobei jede Klaue (27) in Auflage auf einem Buckel (18) ist, der von einer oberen Fassade (17) des entsprechenden Längsträgers (6) vorragt.

5. Baugruppe (2) nach einem der vorstehenden Ansprüche, umfassend:
- einen Sitz (9), der einen hinteren Unterteil (110) zum Befestigen an der Karosserie (3) umfasst;
**dadurch gekennzeichnet, dass** die Baugruppe (2) umfasst:
- eine Schiene (125), die fest mit dem Unterbau (4', 4) verbunden ist, wobei diese Schiene (125) mehrere Befestigungszonen (126, 127) definiert;
- eine Kufe (128), die angebaut und in der Schiene (125) im Bereich einer der Befestigungszonen (126, 127) befestigt ist, wobei der hintere Unterteil (110) an der Kufe (128) befestigt ist.

6. Baugruppe (2) nach Anspruch 5, **dadurch gekennzeichnet, dass** der hintere Unterteil (110) mit einer oberen Oberfläche (115) des hinteren Fußbodens (7) in Berührung ist, und die Schiene (125) auf einer unteren Oberfläche (116) des hinteren Fußbodens (7) befestigt ist, wobei die obere und untere Oberfläche (115, 116) einander entgegengesetzt sind.

7. Baugruppe (2) nach einem der Ansprüche 5 und 6, **dadurch gekennzeichnet, dass** die Schiene (125) im Querschnitt ein U-Profil aufweist und eine Seele (132) und zwei Flügel (133) einander gegenüber umfasst.

8. Baugruppe (2) nach Anspruch 7, **dadurch gekennzeichnet, dass** die Kufe (128) umfasst:
- zwei Wände (136), die vertikal bezüglich einer Basis (135) und einander gegenüber vorragen;
- zwei vertikale Zungen (140) einander gegenüber und die von Seitenrändern jeder Wand (136) vorragen, wobei die vertikalen Zungen (140) auf den Flügeln (133) in Auflage sind;
- eine horizontale Zunge (141), die von dem unteren Rand jeder Wand (136) vorragt, wobei die horizontalen Zungen (141) mit der Seele (132) in Auflage sind;
wobei die vertikalen Zungen (140) an den Flügeln (133) befestigt sind, und die horizontalen Zungen (141) an der Seele (132) befestigt sind.

9. Baugruppe (2) nach einem der Ansprüche 1 bis 8, wobei:
der Unterbau zwei geneigte Ebenen (8) umfasst, die zu beiden Seiten des Absatzbretts (8) liegen; mindestens einen Sitz (9), der eine hintere Unterlage (210) zum Befestigen an der Karosserie (3) umfasst;
**dadurch gekennzeichnet, dass**:
- diese hintere Unterlage (210) mindestens zum Teil gegenüber einer der geneigten Ebenen (208) liegt;
- die Baugruppe (2) einen Träger (227) umfasst, der an den Unterbau (4) angebaut und daran befestigt ist, wobei die hintere Unterlage (210) auf dem Träger (227) befestigt ist.

10. Baugruppe (2) nach Anspruch 9, **dadurch gekennzeichnet, dass** der Träger (327) einen abgeschrägten Körper (328) umfasst, wobei dieser Körper (228) eine untere Oberfläche umfasst, die zu einer oberen Fläche (220) der geneigten Ebene (208) parallel ist, und eine obere Oberfläche (230), die im Wesentlichen horizontal ist, auf der die hintere Unterlage (210) befestigt ist.

11. Baugruppe (2) nach einem der Ansprüche 9 bis 10, **dadurch gekennzeichnet, dass** die hintere Unterlage (210) einen Sekundärclip (241) umfasst, der geeignet ist, sich in eine Aussparung (242) zusammenzusetzen, die in dem Träger (227) im Bereich der oberen Oberfläche (230) angelegt ist.

12. Fahrzeug (1), das eine Baugruppe (2) nach einem der vorstehenden Ansprüche umfasst.

## Claims

1. Assembly (2) comprising:
- a motor vehicle (1) body (3), with this body (3) including an underbody (4) comprising a front floor (5), laterally delimited by two longitudinal members (6), and a rear floor (7), raised with respect to the front floor (5), and connected thereto by a beaded board (8);
- at least one second-row seat (9) comprising a front plate (10) for securing to the body (3);
the assembly (2) comprises a cross member (23) secured to each one of its ends on a longitudinal member (6) **characterised in that**
- the front plate (10) is situated opposite the front floor (5) and near the beaded board (8);
- the cross member (23) extending above and at a distance from the floor (5), with the front plate (10) being secured on the cross member (23).

2. Assembly (2) according to claim 1, **characterised in that** the cross member (23) has a U-shaped profile in the longitudinal section, and comprises a core (24) and two wings (25) opposite one another, with the front plate (10) being secured on the core (24).

3. Assembly (2) according to claim 2, **characterised in that** the wings (25) of the cross member (23) are bearing on an upper face (15) of a tunnel (14) of the front floor (5).

4. Assembly (2) according to claim 3, **characterised in that** the cross member (23) comprises at each lateral end a claw (27), with each claw (27) bearing on a boss (18) protruding from an upper façade (17) of the corresponding longitudinal member (6).

5. Assembly (2) according to any preceding claim comprising:
- a seat (9) comprising a rear base (110) for securing to the body (3);
**characterised in that** the assembly (2) comprises:
- a rail (125), integral with the underbody (4', 4), with this rail (125) defining several areas (126, 127) for securing;
- a pad (128), added and secured in the rail (125), on one of the areas (126, 127) for securing, with the rear base (110) being secured to the pad (128).

6. Assembly (2) according to claim 5, **characterised in that** the rear base (110) is in contact with an upper surface (115) of the rear floor (7), and the rail (125) is secured on a lower surface (116) of the rear floor (7), with the upper and lower surfaces (115, 116) being opposite.

7. Assembly (2) according to one of claims 5 and 6, **characterised in that** the rail (125) has a U-shaped profile in the transversal section and comprises a core (132) and two wings (133) opposite one another.

8. Assembly (2) according to claim 7, **characterised in that** the pad (128) comprises:
- two walls (136) vertically protruding with respect to a base (135) and opposite one another;
- two vertical tabs (140) opposite one another and protruding from the lateral edges of each wall (136), with the vertical tabs (140) bearing with the wings (133);
- a horizontal tab (141) protruding from the lower edge of each wall (136), with the horizontal tabs (141) bearing with the core (132);
the vertical tabs (140) being secured to the wings (133) and the horizontal tabs (141) being secured to the core (132).

9. Assembly (2) according to one of claims 1 to 8, wherein the underbody comprises two inclined planes (8), situated on either side of the beaded board (8); at least one seat (9) comprising a rear plate (210) for securing to the body (3),
**characterised in that**:
- the rear plate (210) is at least partially situated opposite one of the inclined planes (208);
the assembly (2) comprises a support (227), added and secured to the underbody (4), with the rear plate (210) being secured on the support (227).

10. Assembly (2) according to claim 9, **characterised in that** the support (327) comprises a bevelled body (328), with this body (228) comprising a lower surface parallel to the upper face (220) of the inclined plane (208) and a substantially horizontal upper surface (230) on which the rear plate (210) is secured.

11. Assembly (2) according to any of claims 9 to 10, **characterised in that** the rear plate (210) comprises a secondary clip (241) able to be clipped in a notch (242) made in the support (227) on the upper surface (230).

12. Vehicle (1) comprising an assembly (2) according to one of the preceding claims.
